# EUROPEAN PATENT SPECIFICATION

(11) **EP 0 831 982 B1**
(45) Date of publication and mention of the grant of the patent: **07.05.2003**
(21) Application number: 96917210.5
(22) Date of filing: 06.06.1996
(51) Int. Cl.: B23P 19/06, B23P 19/00

(54) **RETAINING DEVICE FOR ASSEMBLY PARTS**
VORRICHTUNG ZUM HALTEN VON MONTAGETEILEN
DISPOSITIF DE MAINTIEN POUR PIECES DE MONTAGE

(30) Priority: 07.06.1995 US 482760
(43) Date of publication of application: 01.04.1998
(73) Proprietor: MULTIFASTENER CORPORATION, Detroit, Michigan 48239 (US)
(72) Inventor: SICKELS, David, W., Plymouth, MI 48170 (US); LUCKHARDT, Wolfgang, D-61462 Königstein (DE)
(74) Representative: Morgan, James G.
(86) International application number: US9609018
(87) International publication number: WO96040470

(56) References cited:
- WO-A-93/19890
- DE-A- 2 263 648
- US-A- 3 061 837
- US-A- 3 152 628
- US-A- 3 780 417
- US-A- 4 454 650
- US-A- 4 698 905
- US-A- 5 172 467
- US-A- 5 237 733

## Description

The present invention relates to an installation tool in accordance with the preamble of claim 1, to a fastener for installation into a workpiece in accordance with the preamble of claim 7 and to a method for installing a fastener into a workpiece in accordance with the preamble of claim 12.

The present invention is suited for use with any type of fastener, particularly pierce-type fasteners, which satisfy the requirements of claim 7. The preambles of claims 1,7 and 12 reflect the prior art of WO93/19890.

In the mass production of parts, fastener installation tools are commonly used to simultaneously install fasteners in, for example, a panel, as the panel is being formed in a press. The installation tool is mounted in the press and, as the press closes, the fastener is installed. The installation tool has a housing, a plunger passage, a plunger operatively mounted in the plunger passage, and a fastener feed mechanism that feeds fasteners into the plunger passage. The passage and the fastener have complementary shapes, and the plunger is adapted to drive the fastener through the passage into the panel. To assist in the initial alignment of the fastener with respect to the plunger, catches are used to hold the fastener in the passage as the fastener enters. Once the plunger contacts the fastener, the fastener either drops through to the workpiece or is temporarily held by, for example, spring-loaded detents extending into the passage.

Although the passage and fastener are configured to facilitate the proper alignment of the fastener with respect to the plunger and the panel, the fastener can become misaligned within the passage. For example, if the detents stick or fail, the fastener will cock in the passage and be misaligned when it is driven into the panel. Misalignment problems are exacerbated when the installation tool is not vertically oriented with respect to the workpiece. Non-vertical orientations are very common. As should be appreciated, misalignment can result in faulty installations, damage to the part, and damage to the installation tool.

The installation head illustrated in US-A-5,636,426 (formerly United States patent application Serial No. 08/307,849), an equivalent of WO93/19890 overcomes the above problems. However, it does have disadvantages. First, the fingers which hold the fastener against the plunger do not hold the fastener at the critical point of contact with the workpiece. It has been found by Applicant that it is important to hold the fastener until at least the installation end of the fastener engages the workpiece so that the fastener is being held between the plunger and the workpiece. At this point, the fingers can be removed and proper installation will be ensured. Additionally, Applicant has found that in many applications, it is important that the fingers maintain guiding contact with the fastener until the fastener is completely installed in the panel. Neither of these holding techniques can be achieved by the disclosed invention because the fingers are cammed away from the fastener through contact with the panel surface. By definition, the fingers release the fastener prior to the fastener making installation contact with the panel. Although this distance is slight, it is sufficient to result in misalignment of fasteners. This is particularly true, since the panel surface is required to act as a cam surface when, in fact, it is not designed to be a cam surface. Therefore, any restriction of the fingers can result in the fingers not moving properly and resulting in a cocked fastener at the critical installation point. It should be appreciated that any tilting of the fastener at installation can result in an improper installation of the fastener.

Another disadvantage to the installation head described in WO93/19890 is the potential marring of the panel surface due to the fingers being cammed against the surface at installation. This marring can be unacceptable in many applications, resulting in rejected panels and increased manufacturing costs.

In order to overcome the above problems the present invention provides an installation tool in accordance with claim 1, a fastener in accordance with claim 7 and a method of installing a fastener in accordance with claim 12.

Thus, the installation tool of the present invention has fingers that hold a fastener from the point that the fastener enters the plunger passage until the fastener is either partially or completely installed in, for example, a panel. The term "panel" is used herein to define the workpiece, and panel may include, for example, a plate, sheet metal part, such as a body panel, bracket, or structural member. Further, the present invention includes an improved fastener that has sides that are displaced to mate with the free ends of the fingers in the installation tool so that the fastener can be held and guided throughout its path of travel. Still further, the present invention includes a method for installing a fastener with an installation tool so that the fastener is held throughout its travel to ensure a properly aligned, properly installed fastener. The present invention is described with respect to pierce-type fasteners but would be suited for other types of fasteners, such as rivet-type fasteners, weld nuts, etc.

The installation tool of the present invention has a main body with a nosepiece having a bore or fastener passage and a fastener entry path for inserting fasteners into the passage adjacent the plunger. The nosepiece reciprocates relative to the plunger which has a free end adapted to engage the fastener when the fastener is in the bore for driving the fastener through the main body and into a panel or other workpiece. At least two fingers are operatively connected to and pivotally mounted with respect to the plunger and the fastener. The fingers extend beyond the free end of the plunger for engaging the fastener and, in particular, for engaging a displaced area formed on the fastener. The fingers hold the fastener adjacent the plunger as the plunger drives the fastener to the panel. This ensures that the fastener is positively held in a properly aligned position with respect to the plunger and the panel from the point that the fastener enters the plunger passage to at least engagement of the fastener against the panel.

The fastener of the present invention is specifically designed for installation by the installation head of the present invention. The fastener includes top, bottom, and sides, with the bottom having a configuration that, when pressed into a workpiece, will interlock the bottom of the fastener with the workpiece material to provide a strong connection between the fastener and the workpiece. As will be understood, top, bottom, side, etc., are relative terms used for ease of description; however, the installation head of this invention may be adapted to attach a fastener to a panel in most any attitude and thus such terms are not limiting. The side of the fastener includes a displaced area that is positioned between the top and bottom of the fastener. The displaced area is adapted to receive the fingers in a positive inter-engagement between the fastener and the installation tool fingers to accurately position and align the fastener with respect to the workpiece. The displacement area is defined by a displaced portion in the side of the fastener which mates with the free end of the fingers of the installation tool. The displaced surface can be in the shape of a groove having a generally semi-circular or triangular cross-section; a ridge having a generally semi-circular cross-section; an indent which is adapted to receive a protrusion on the free end of the fingers; a protrusion which is adapted to be received within an indent on the free end of the fingers; a slot which extends perpendicular to the top and bottom surfaces, etc. It should be appreciated by those of ordinary skill in the art that many different types of displaced surfaces will provide the positive engagement between the fingers and the fastener.

The fingers of the present invention are disclosed in three different embodiments; however, it should be appreciated by those of ordinary skill that other embodiments would fall within the scope of the invention. It is critical that the fingers be mounted to the plunger and hold a fastener until at least the point when the fastener is trapped between the plunger and the workpiece before the fingers release the fastener. In one embodiment, the fingers are pivotally mounted to the plunger and the pivotal movement is controlled by adjoining contoured surfaces on the finger and nosepiece which slide with respect to one another as the nosepiece moves with respect to the plunger. In this embodiment, the outer edge of the finger, away from the plunger, is contoured and engages the inner wall of the plunger passage in the nosepiece, which has a complementary contour. The finger contour includes a guide or control portion which engages a complementary guide portion on the nosepiece which corresponds to the finger being forced inwardly in the direction of the plunger to hold the fastener adjacent the end of the plunger. Above the guide surface, in the direction opposite the workpiece, there is an offset region which is adapted to mate with an offset region in the nosepiece to provide sufficient space for the finger to pivot away from the fastener. The fingers release the fastener by the withdrawal of the plunger from the fastener after complete installation. In this embodiment, the gripping tip of the finger and the displaced side of the fastener are formed with cam surfaces which permit the fingers to pivot with respect to the fastener as the plunger is retracted after installation.

In a further embodiment, the fingers are pivotally mounted to the plunger and have a cam surface at one end opposite the gripping tips of the fingers. The free end of the fingers, which define the gripping tips, are adapted to engage the displaced area of the fastener. The fingers are forced into engagement with the displaced area of the fastener by a spring or opposed springs which extend between the finger and the plunger. In one embodiment, there is a recess formed in the nosepiece which receives a spring head, and legs extend from the head to bias against the finger. Alternatively, a recess could be formed in the plunger which would engage the opposite side of the finger to bias the finger into engagement with the fastener. In this embodiment, the spring engages the finger above the pivot point which is between the gripping tip and the spring engagement point. In this embodiment, when the fastener has been fully installed, retraction of the plunger causes the gripping tip to cam against the displaced portion of the fastener to pivot the fingers against the bias of the spring and release the gripping tips from the fastener.

It will be apparent to one of ordinary skill that other embodiments could be used to obtain similar results and objectives and still be within the scope of the invention. With reference to the following brief description of the drawings and disclosure, the invention will be described.

### DESCRIPTION OF THE DRAWINGS

Figure 1 is a longitudinal cross-section through an installation tool of an embodiment of the present invention.
Figure 2 is a longitudinal cross-section through the retaining device of the installation tool of Figure 1, where the retaining device is shown in various operating states in the left and right sides of Figure 1.
Figure 3 is a longitudinal cross-section of a further embodiment of the retaining device.
Figure 4 is an end view of the tool of Figure 3.
Figure 5 is a longitudinal cross-section of a further embodiment of the retaining device.

### DETAILED DESCRIPTION OF THE INVENTION

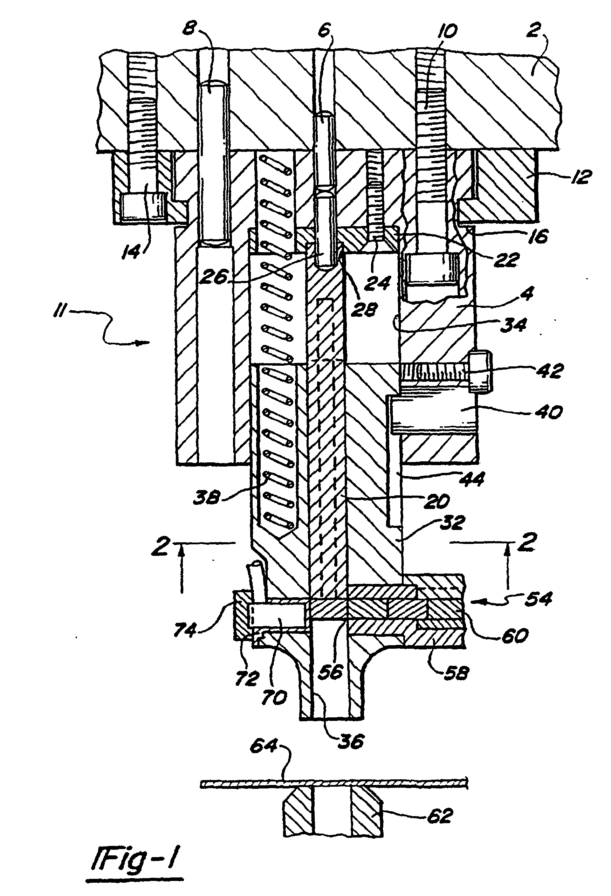

The installation tool of an embodiment of the present invention is shown generally at 11 in Figure 1. Installation tool 11 is mounted to a press which is shown generally at 2. Press 2 can be moved up and down by a conventional actuator which is not illustrated. Installation tool 11 has a housing 4 which is positioned with respect to press 2 by centering pins 6 and 8 and is tightened against the lower side of press 2 by screws 10 or by clamping catches 12. The clamping catches 12 have protrusions that engage into transverse grooves 16 of the housing and are attached by screws 14 to press 2.
A plunger 20 is securely attached to housing 4 through a pressure plate 22 located between the plunger and the housing 4. The pressure plate 22 is attached by screws 24 to housing 4. A centering pin 26 is received within a bore in the pressure plate 22 and extends into a bore of the housing 4 adjacent centering pin 6. The centering pin 26 provides relative positioning between the housing 4 and the plunger 20 and pressure plate 22.
A guidepiece or nosepiece 32 is mounted in an opening 34 located in housing 4. The nosepiece 32 is adapted to longitudinally reciprocate with respect to the housing 4. The nosepiece 32 defines an interior plunger passage 36. Plunger 20 extends into passage 36 and slides in the plunger passage 36 during any relative shift in position between the nosepiece 32 and housing 4.
The nosepiece 32 is held under tension by four helical compression springs 38, which are arranged around the plunger 20 within the guide opening 34. In the disclosed embodiment, springs 38 extend between nosepiece 32 and press 2. Tension is applied against nosepiece 32 in a direction away from the press 2, forcing the nosepiece in the direction of the workpiece or panel 64. A locking key 40 limits the outward movement of nosepiece 32. Key 40 is held in place by a locking screw 42 which extends into housing 4. Key 40 has a protrusion that extends into a slot 44 in the nosepiece 32.
In the disclosed invention, the plunger 20 and the plunger passage 36 have the same rectangular cross-section and the nosepiece 32 and guide openings 34 have the same rectangular cross-section. Thus, a precise control and positioning of the plunger 20 relative to the nosepiece 32 and the nosepiece 32 relative to the housing 34 is assured. At the same time, the choice of this cross-sectional shape achieves a simple rotational lock of the plunger 20 and of the guidepiece 32.
Fasteners 60 are fed into the plunger passage 36 by a conventional feeding device 54, which is not shown in detail. Feeding device 54 has an inlet line 58 with an inlet opening 56 that laterally intersects the nosepiece 32. The inlet line 58 feeds fasteners 60 into the plunger passage 36 through lateral inlet opening 56. The fasteners 60 are sequentially pushed into the passage 36 adjacent or below the plunger 20 which then drives the individual fasteners 60 in the direction of a workpiece which is disclosed as a sheet metal panel 64.

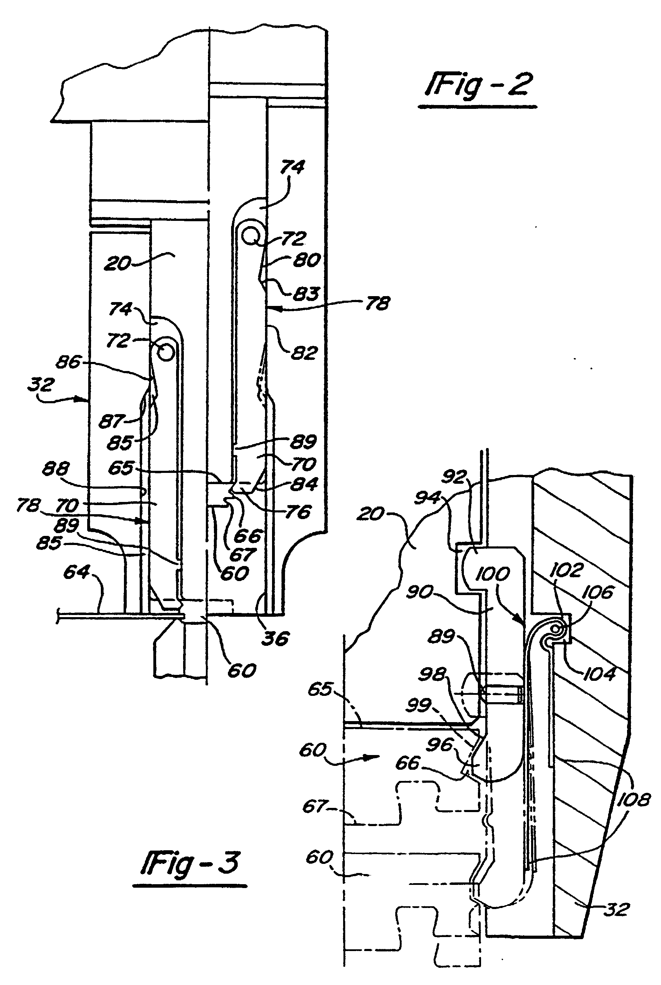

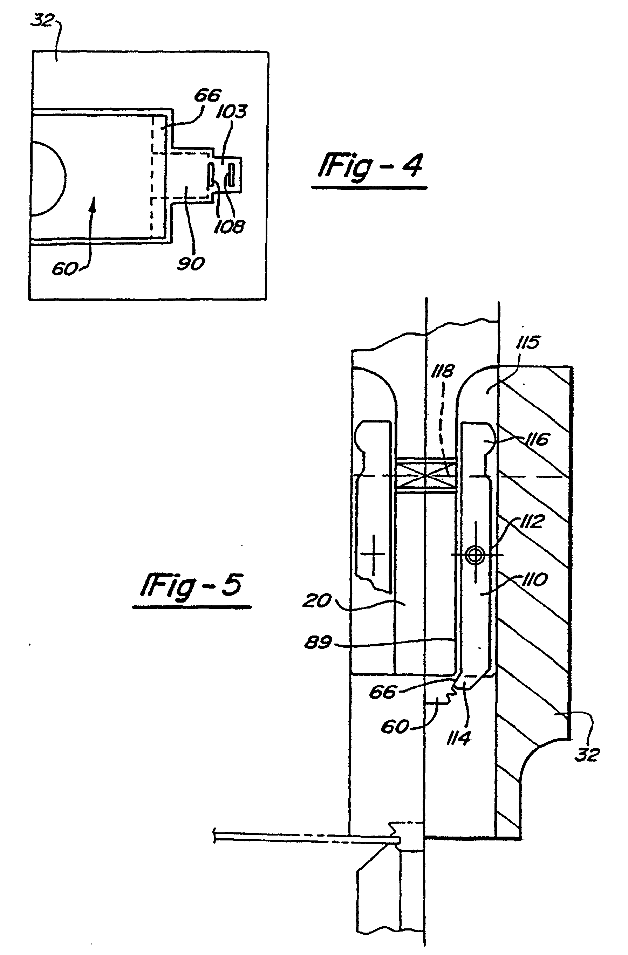

A stationary bottom die 62 is mounted below the nosepiece 32. Sheet metal panel 64 is positioned on the die 62 between die 62 and plunger 20. The fasteners 60 are then pressed into the sheet metal panel as press 2 closes. As the press closes, the nosepiece 32 is displaced relative to the housing 4 and relative to the plunger 20, so that the plunger 20 drives the fastener 60 from its position in plunger passage 36 adjoining the inlet opening 56, downward through the plunger passage to the panel 64. Based upon the simple rotation-lock control between guidepiece 32 and the guide opening 34 and between plunger 20 and the passage 36, accurate alignment of the plunger passage 36 to the stationary bottom die 62 is achieved. This is critical when the joined parts, such as rectangular pierce or clinch nuts, must be pressed into the sheet metal 64 in accurate aligned relationship with respect to the panel.
It is preferable that the parts slide with respect to each other. It is also preferable that the parts not require lubrication. Therefore, the housing 4 and the guidepiece 32 are preferably manufactured from bronze, while the plunger 20 is manufactured from tool steel.
With reference to Figure 2, the fastener control fingers 70 are illustrated. In the preferred embodiment, there are two fingers 70 positioned to generally intersect the entry path of the fasteners entering through inlet opening 56. The fingers 70 are pivotally mounted to the plunger 20 through pivot pins 72. The plunger 20 has slots 74 for receipt of the fingers 70 to reduce the overall size of the plunger 20 and nosepiece 32. The control fingers 70 pivot with respect to the plunger 20 to engage and disengage the fastener 60. The free end 76 of each finger 70 is configured to mate with a displaced area 66 on the side of the fastener 60. The displaced area 66 will be described in greater detail below.
Pivotal movement of the fingers 70 is controlled by mating cam surfaces on the fingers 70 and the inner wall of the nosepiece 32. Each of the fingers 70 has a contoured edge 78 opposite the fastener 60. The edge 78 has an offset 80 and a guide or control surface 82 which are joined by a transition surface 83. As disclosed, the control surface 82 ends in an angled surface 84. The inner wall of the nosepiece is contoured with a control surface 86 and an offset 88 which are joined by a transition surface 87. In the preferred embodiment, the surfaces 86, 87 and 88 are the base of slots cut into the inner wall of the nosepiece 32 to reduce the width of the nosepiece. The opposite edge of the finger 70 includes a stop 89 which controls the amount of inward pivotal movement of the finger 70.
In operation, with the plunger 20 in the position illustrated to the right in figure 2, a fastener 60 is fed into the passage 36 through inlet opening 56. In figure 2, the inlet opening 56 is generally perpendicular to the figure and therefore is hidden from view. As can be seen, the control surfaces 82 and 86 are in contact and the free end 76 is inserted into the displaced area 66 of fastener 60. In this position, the fingers 70 control the position of the fastener with respect to the plunger 20 and the panel 64. The stop 89 prevents the fingers 70 from pressing against the fastener 60, which is important because the fastener 60 has to be freely fed into the passage 36 between the fingers 70. The stop 89 allows easy insertion of the fastener 60 between the free ends 76 of the fingers 70, but will still allow sufficient engagement between the fingers 70 and the fastener 60 to support and control the fastener during its travel to the panel and through installation. While the surfaces 82 and 86 are in contact, the fastener 60 is controlled by the fingers 70 as it moves with respect to the nosepiece 32. The control is achieved by the surfaces 82 and 86 sliding against each other and maintaining engagement between the free end 76 and displaced area 66 of fastener 60.
Referring now to the left side of figure 2, the fastener 60 has been installed into panel 64. The fingers 70 have controlled the position of the fastener 70 throughout its travel from the introduction of the fastener 70 into the passage 36 through installation into the panel 64. As can be seen, the control surfaces 82 and 86 are no longer engaged. There is a clearance space 85 between the control surface 82 and the offset portion 88 of nosepiece 32 and between the offset 80 of finger 70 and control surface 86 of nosepiece 32. This clearance space 85 allows the fingers 70 to pivot with respect to the plunger 20 and the fastener 60. To facilitate the pivoting of finger 70, the finger 70 is rounded about pivot pin 72.
As the press opens, the plunger 20 is pulled away from the fastener 60. This movement causes the free ends 76 of fingers 70 to cam against the displaced area 66 and pivot the fingers 70 into the clearance space 85 away from the fastener 60 to release fastener 60. As the press 2 continues to open, the transition surfaces 83 and 87 cam against one another to smoothly bring the control surfaces 82 and 86 into sliding contact. As the press reaches its open position, the feeding device feeds another fastener 60 into the plunger passage 36 between the closed fingers 70 for another installation cycle.
As discussed above, the fastener 60 has a displaced area 66 which mates with the free end 76 of the fingers 70. As illustrated, the displaced area 66 is between the top 65 and bottom or installation end 67 of fastener 60. By positioning the displaced area 66 above the installation end 67, the fingers 70 can control the position of the fastener 60 throughout its path of travel as discussed above. The displaced area 66 is preferably a lateral groove which extends across the width of the fastener 60. See figure 4. It should be appreciated that the displaced area could take many different forms, although a concave groove will be preferred in some applications. It could be a notch, a flange, a dimple, a protrusion, a ridge, etc. It will be understood by those of ordinary skill in the art that the free end 76 of the fingers would be shaped to compliment the shape of the displaced area 66.
With reference to figure 3, a further embodiment of the present invention is illustrated. In this embodiment, the fingers 90 are attached to the plunger 20 through the engagement of a protrusion 92 within a recess 94 formed in the plunger 20. As illustrated, the free and of the protrusion 92 is rounded to facilitate pivoting of the finger 90. The finger 90 has a free end with a cam surface 98 which is adapted to cam against the cam surface 99 of the displaced area 66 of fastener 60. As in the previous embodiment, the finger 90 has a stop 89 to limit the amount of engagement between the finger 90 and the fastener 60. As illustrated in Figure 3 in solid lines, the fastener 60 has just been fed between fingers 90, and there is space between the fingers 90 and fastener 60.
Unlike the previous embodiment, this embodiment uses a biasing means 100 to force the finger 90 in the direction of the fastener 60. The biasing means 100 is illustrated as a spring with a head 102. The spring 100 is positioned in a slot 103 formed in nosepiece 32 and the head 102 is inserted into a recess 104 in the nosepiece 32. A pin 106 extends through the head to hold the spring 100 in place during assembly. The spring includes opposed legs 108 that bias against the finger 90 and the nosepiece 32 to force the finger 90 in the direction of the plunger 20.
In operation, the finger 90 slides along the leg 108 and is biased into the fastener 60. The solid lines of figure 3 show the open position of the press 2 with the fastener 60 fed between the fingers 90. The phantom lines illustrate the position of the fingers 90 and the spring 100 as the fastener 60 is installed. As can be seen, as the press opens, the cam surface 98 cams against cam surface 99 and pivots the fingers 90 against the bias of spring 100 releasing the fastener 60.
As can be seen in figure 4, the fastener 60 is spaced from the walls of the nosepiece 32. It should be appreciated by those of ordinary skill in the art that the fastener 60 may slide along the inner walls of nosepiece 32 to further guide the fastener 60 throughout its travel path.
With reference to figure 5, a further embodiment of the present invention is illustrated. In this embodiment, the fingers 110 are pivotally mounted to the plunger 20 by a pivot pin 112. As in the previous embodiments, the free end 114 of finger 110 engages the displaced area 66 of fastener 60. The fingers 110 are mounted in slots 115. The opposite end of the finger 110 has a cam surface 116 which engages the inner wall of nosepiece 32. The cam surface 116 is a rounded surface to reduce friction. A stop 89 is provided as in the previous embodiments. In this embodiment, the fingers 110 are biased by a coil spring 118 to pivot the free end 114 in the direction of the plunger 20. After the fastener is installed, the fingers 110 cam against the displaced area 66 to overcome the bias of springs 118 and release fastener 60.

The present invention has been described in what is considered to represent its preferred embodiment. However, it should be noted that the invention can be practiced otherwise and is specifically illustrated and described without departing from its scope as defined in the appended claims.

## Claims

1. An installation tool for installing a fastener (60) on a panel (64), said fastener including a body portion, a central projecting attachment portion having a free end, a side face and a displaced area (66) on generally opposed sides of said side face, said displaced area (66) being spaced radially from said side face to mate with generally opposed gripping fingers (70) in said installation tool, said installation tool comprising:
a main body (4) having a plunger passage (36) and an intersecting fastener feed passage (56) receiving fasteners for installation to said panel with said fasteners oriented with said attachment portion facing said panel (64);
a plunger (20) reciprocally mounted within said plunger passage (36) having a free end reciprocating through said feed passage to attach a fastener (60) to said panel (64);
at least two holding fingers (70, 90, 110) operatively supported on and moveable with said plunger (20), said fingers each having a free end portion extending beyond said plunger free end for positively retaining a fastener upon receipt of said fastener in said plunger passage from said feed passage;
said plunger (20) then driving said fastener attachment portion into said panel (64) while said fastener is retained by said fingers maintaining the orientation of said fastener as it is driven into said panel; and
said finger free ends swinging outwardly to release said fastener, said displaced areas of said fastener being formed such that the fingers are released by the relative movement of the fastener to the fingers,
**characterized in that**
the holding fingers (70) have a leg portion (70) and a foot portion (76), the foot portion extends inwardly in the direction of the plunger with the foot portion being adapted to engage the displaced area (66) of the fastener, the length of the holding fingers (70, 90, 110) relative to the plunger (20) and fastener (60) is such that the surface of the fingers opposing said panel (64) have a clearance with respect to said panel after installation of the fastener in the panel, that, when the plunger is retracted after installation, said foot ends of said fingers are adapted to cam against said displaced areas (66) and to move away from said installed fastener to release said installed fastener.

2. The installation tool of claim 1, **characterized in that** the free end (76) of the foot portion of each finger is curved to cam against the displaced area (66) of the fastener (60) to release the fastener after the fastener has been installed.

3. The installation tool of claim 1 or claim 2, further comprising a sleeve (32) reciprocally mounted about the plunger (20), said sleeve having a contoured inner wall (86, 87, 88); the fingers have a contoured outer edge (80, 82, 83) adjacent the inner wall of the sleeve, the contoured outer edge of the fingers and the contoured inner edge of the sleeve being juxtaposed and cooperatively shaped to pivot the fingers (70) into and out of engagement with the fastener (60) as the plunger and the sleeve move with respect to one another.

4. The installation tool of claim 1, further comprising biasing means (102) to bias the fingers in the direction of the plunger to positively engage the fastener.

5. The installation tool of any of claims 1 to 4, wherein said displaced areas (66) and said retaining free ends of said fingers are spaced from said fastener attachment portion free end.

6. The installation tool of claim 5, wherein said displacement area (66) of said fasteners is indented from a side surface of said fasteners and said retaining free ends (76) of said fingers project from adjacent side surfaces of said fingers and are configured to be received in said displacement area.

7. The installation tool of any of the preceding claims, wherein said fastener (60) is a self-attaching fastener.

8. A fastener for installation into a workpiece, the fastener having a longitudinally extending centerline and being adapted to be installed by an installation tool, the installation tool having a plunger (20) for engaging the fastener (60) and driving it into a workpiece (64) and holding fingers (70) for holding and guiding the fastener as the fastener is driven by the plunger at least until the fastener is self supported between the plunger and the workpiece, the fastener comprising:
a body portion (60), a central projecting attachment portion having a free end (67), a side face and a displaced area (66) provided on said side faces on generally opposed sides of said longitudinally extending centerline and spaced from it, said central projecting attachment portion having a configuration that when pressed into a workpiece it will interlock the bottom of the fastener with the workpiece material to provide a strong connection between the fastener and the workpiece; and
said displaced areas (66) being adapted to receive the fingers in a positive inter-engagement between the fastener and the fingers to accurately position and align the fastener with respect to the workpiece until the bottom of the fastener and the workpiece are engaged,
**characterized in that**
said displaced areas are spaced from said central projecting attachment portion by an amount providing a clearance between said fingers and said workpiece after installation of said fastener and formed with cam surfaces which permit the fingers to pivot with respect to the fastener as the plunger is retracted after installation.

9. The fastener of claim 8, wherein the displaced areas (66) are defined by grooves extending generally laterally with respect to the longitudinally extending centerline of the fastener along at least two opposed sides of the fastener.

10. The fastener of claim 9, wherein the groove is generally semi-circular in cross-section and whereby the fingers (70) are cammed away from the fastener (60) after the fastener is installed into the workpiece.

11. The fastener of claim 8, wherein the displaced areas (66) are defined by notches formed in at least opposed sides of the fastener.

12. The fastener of claim 8, wherein the displaced areas (66) are protruded areas on the fastener.

13. A method for installing a fastener into a workpiece, the method including the steps of:
a. providing an installation tool for installing a fastener (60), the installation tool having a plunger (20) for engaging a fastener and driving the fastener into a workpiece (64) and holding fingers (70, 90, 110) for holding and guiding the fastener as the fastener is driven by the plunger at least until the fastener (60) is trapped between the plunger (20) and the workpiece (64);
b. providing a fastener (60) for installation into a workpiece (64), the fastener having a body portion (60), a central projecting attachment portion having a free end (67), a side face and displaced areas (66) on generally opposed sides of said side face;
c. inserting a fastener (60) into the installation tool;
d. locating the fastener (60) between the fingers (70) at the displaced area (66) to accurately position and align the fastener with respect to the workpiece;
e. engaging the plunger (20) against the fastener and driving the fastener against the workpiece as the fingers grip the fastener until the bottom of the fastener and the workpiece are at least engaged;
f. forcing the fingers away from the fastener after step e.
**characterized by**
providing holding fingers (70, 90, 110) having a length relative to the plunger and the fastener which produces a clearance between the surface of the fingers opposing the workpiece and the workpiece itself after installation of the fastener in the panel, and
retracting the plunger after the fastener has been installed.

14. The method of claim 13 and further comprising the step of retracting the plunger after the fastener has been installed to cam foot ends (76) of the fingers against said displaced areas (66) and away from the installed fastener thereby releasing said fastener.

15. The method of claim 13 or claim 14, wherein the fingers (70) engage the fastener (60) until the fastener is completely installed and then the fingers release the fastener.

16. The method of claim 13, further including the step of biasing the fingers against the fastener as the fastener is being installed.

## Patentansprüche

1. Installationswerkzeug zur Installation eines Befestigungselements (60) an einer Tafel (64), wobei das Befestigungselement einen Körperabschnitt, einen zentralen vorragenden Befestigungsabschnitt mit einem freien Ende, einer Seitenfläche und einem versetzten Bereich (66) auf im Allgemeinen gegenüberliegenden Seiten der Seitenfläche umfasst, wobei der versetzte Bereich (66) radial von der Seitenfläche beabstandet ist, um mit im Allgemeinen gegenüberliegenden Greiffingern (70) in dem Installationswerkzeug zusammenzupassen, wobei das Installationswerkzeug umfasst:
einen Hauptkörper (4) mit einem Plungerdurchgang (36) und einem überkreuzenden Befestigungselementzufuhrdurchgang (56), der Befestigungselemente zur Installation an der Tafel aufnimmt, wobei die Befestigungselemente so orientiert sind, dass der Befestigungsabschnitt zu der Tafel (64) weist;
einen Plunger (20), der hin- und herbewegbar in dem Plungerdurchgang (36) befestigt ist und ein freies Ende aufweist, das durch den Zufuhrdurchgang hin- und herbewegbar ist, um ein Befestigungselement (60) an der Tafel (64) zu befestigen;
zumindest zwei Haltefinger (70, 90, 110), die funktionell an dem Plunger (20) getragen und mit diesem bewegbar sind, wobei die Finger jeweils einen freien Endabschnitt aufweisen, der sich über das freie Ende des Plungers hinaus erstreckt, um ein Befestigungselement bei Empfang des Befestigungselements in dem Plungerdurchgang von dem Zufuhrdurchgang sicher zu halten;
wobei der Plunger (20) anschließend den Befestigungsabschnitt des Befestigungselements in die Tafel (64) treibt, während das Befestigungselement durch die Finger gehalten wird, wobei die Orientierung des Befestigungselements beibehalten wird, wenn dieses in Tafel getrieben wird; und
wobei die freien Enden der Finger nach außen schwingen, um das Befestigungselement freizugeben, wobei die versetzten Bereiche des Befestigungselements derart ausgebildet sind, dass die Finger durch die relative Bewegung des Befestigungselements zu den Fingern freigegeben werden,
**dadurch gekennzeichnet, dass**:
die Haltefinger (70) einen Beinabschnitt (70) und einen Fußabschnitt (76) aufweisen, wobei sich der Fußabschnitt einwärts in der Richtung des Plungers erstreckt und der Fußabschnitt derart ausgebildet ist, um mit dem versetzten Bereich (66) des Befestigungselements in Eingriff treten zu können, wobei die Länge der Haltefinger (70, 90, 110) relativ zu dem Plunger (20) und dem Befestigungselement (60) derart ausgebildet ist, dass die Fläche der Finger gegenüberliegend der Tafel (64) einen Spielraum bezüglich der Tafel nach Installation des Befestigungselements in der Tafel besitzen, so dass, wenn der Plunger nach einer Installation zurückgezogen wird, die mit den versetzten Bereichen (66) über Nockenwirkung in Verbindung stehenden Fußenden der Finger weiterbewegt und somit von dem installierten Befestigungselement wegbewegt werden, um das installierte Befestigungselement freizugeben.

2. Installationswerkzeug nach Anspruch 1,
**dadurch gekennzeichnet,**
**dass** das freie Ende (76) des Fußabschnittes jedes Fingers derart gekrümmt ist, dass der mit dem versetzten Bereich (66) des Befestigungselements (60) über Nockenwirkung in Verbindung stehende Fußabschnitt weiterbewegt und das Befestigungselement freigegeben wird, nachdem das Befestigungselement installiert worden ist.

3. Installationswerkzeug nach einem der Ansprüche 1 oder 2, ferner mit einer Hülse (32), die hin- und herbewegbar um den Plunger (20) befestigt ist, wobei die Hülse eine konturierte Innenwand (86, 87, 88) aufweist; die Finger einen konturierten Außenrand (80, 82, 83) benachbart der Innenwand der Hülse besitzen, wobei der konturierte Außenrand der Finger und der konturierte Innenrand der Hülse nebeneinander liegen und gemeinsam geformt sind, um die Finger (70) in und aus einem Eingriff mit dem Befestigungselement (60) zu schwenken, wenn sich der Plunger und die Hülse bezüglich zueinander bewegen.

4. Installationswerkzeug nach Anspruch 1,
ferner mit einem Vorspannmittel (102), um die Finger in der Richtung des Plungers vorzuspannen und damit sicher mit dem Befestigungselement in Eingriff zu bringen.

5. Installationswerkzeug nach einem der Ansprüche 1 bis 4,
wobei die versetzten Bereiche (66) und die haltenden freien Enden der Finger von dem freien Ende des Befestigungsabschnittes des Befestigungselements beabstandet sind.

6. Installationswerkzeug nach Anspruch 5,
wobei der Versetzungsbereich (66) der Befestigungselemente von einer Seitenfläche der Befestigungselemente gekerbt ist, und die haltenden freien Enden (76) der Finger von benachbarten Seitenflächen der Fingern vorragen und derart ausgebildet sind, um in dem Versetzungsbereich aufgenommen werden zu können.

7. Installationswerkzeug nach einem der vorhergehenden Ansprüche, wobei das Befestigungselement (60) ein selbst befestigendes Befestigungselement ist.

8. Befestigungselement zur Installation in einem Werkstück, wobei das Befestigungselement eine sich in Längsrichtung erstreckende Zentrallinie besitzt und derart ausgebildet ist, um durch ein Installationswerkzeug installiert werden zu können, wobei das Installationswerkzeug einen Plunger (20) aufweist, um mit dem Befestigungselement (60) in Eingriff zu treten und dieses in ein Werkstück (64) zu treiben, und Haltefinger (70) umfasst, um das Befestigungselement zu halten und zu führen, wenn das Befestigungselement durch den Plunger eingetrieben wird, zumindest bis das Befestigungselement zwischen dem Plunger und dem Werkstück selbst gehalten wird,
wobei das Befestigungselement umfasst:
einen Körperabschnitt (60), einen zentralen vorragenden Befestigungsabschnitt mit einem freien Ende (67), eine Seitenfläche und
einen versetzten Bereich (66), der an den Seitenflächen auf im Allgemeinen gegenüberliegenden Seiten der sich in Längsrichtung erstreckenden Zentrallinie und beabstandet dazu vorgesehen ist,
wobei der zentrale vorragende Befestigungsabschnitt eine Gestaltung aufweist, so dass er beim Pressen in ein Werkstück den unteren Bereich des Befestigungselements mit dem Werkstückmaterial verriegelt, um eine starke Verbindung zwischen dem Befestigungselement und dem Werkstück vorzusehen; und
wobei die versetzten Bereiche (66) derart ausgebildet sind, um die Finger in einen sicheren Eingriff zwischen dem Befestigungselement und den Fingern aufzunehmen und das Befestigungselement bezüglich des Werkstückes genau zu positionieren und auszurichten, bis der untere Bereich des Befestigungselements und das Werkstück in Eingriff stehen,
**dadurch gekennzeichnet,**
**dass** die versetzten Bereiche von dem zentralen vorragenden Befestigungsabschnitt um eine Größe beabstandet sind, die einen Zwischenraum zwischen den Fingern und dem Werkstück nach Installation des Befestigungselements vorsieht, und mit Nockenflächen ausgebildet sind, die ermöglichen, dass die Finger bezüglich des Befestigungselements schwenken können, wenn der Plunger nach Installation zurückgezogen wird.

9. Befestigungselement nach Anspruch 8,
wobei die versetzten Bereiche (66) durch Nuten definiert sind, die sich im Allgemeinen quer bezüglich der sich in Längsrichtung erstreckenden Zentrallinie des Befestigungselements entlang zumindest zwei gegenüberliegender Seiten des Befestigungselements erstrecken.

10. Befestigungselement nach Anspruch 9,
wobei die Nut einen im Allgemeinen halbkreisförmigen Querschnitt besitzt, und wobei die in Nockenverbindung stehenden Finger (70) von dem Befestigungselement (60) wegbewegt werden, nachdem das Befestigungselement in dem Werkstück installiert ist.

11. Befestigungselement nach Anspruch 8,
wobei die versetzten Bereiche (66) durch Kerben definiert sind, die in zumindest gegenüberliegenden Seiten des Befestigungselements ausgebildet sind.

12. Befestigungselement nach Anspruch 8,
wobei die versetzten Bereiche (66) vorragende Bereiche an dem Befestigungselement sind.

13. Verfahren zum Installieren eines Befestigungselements in einem Werkstück,
wobei das Verfahren die Schritte umfasst, dass:
a. ein Installationswerkzeug zur Installation eines Befestigungselements (60) vorgesehen wird, wobei das Installationswerkzeug einen Plunger (20), um mit einem Befestigungselement in Eingriff zu treten und das Befestigungselement in ein Werkstück (64) zu treiben, und Haltefinger (70, 90, 110) umfasst, um das Befestigungselement zu halten und zu führen, wenn das Befestigungselement durch den Plunger eingetrieben wird, zumindest bis das Befestigungselement (60) zwischen dem Plunger (20) und dem Werkstück (64) gehalten ist;
b. ein Befestigungselement (60) zur Installation in einem Werkstück (64) vorgesehen wird, wobei das Befestigungselement einen Körperabschnitt (60), einen zentral vorragenden Befestigungsabschnitt mit einem freien Ende (67), eine Seitenfläche und versetzte Bereiche (66) auf im Allgemeinen gegenüberliegenden Seiten der Seitenfläche umfasst,
c. ein Befestigungselement (60) in das Installationswerkzeug eingesetzt wird,
d. das Befestigungselement (60) zwischen den Fingern (70) an dem versetzten Bereich (66) angeordnet wird, um das Befestigungselement bezüglich des Werkstückes genau zu positionieren und auszurichten,
e. der Plunger (20) mit dem Befestigungselement in Eingriff gebracht wird und das Befestigungselement an das Werkstück getrieben wird, wenn die Finger das Befestigungselement ergreifen, bis der untere Bereich des Befestigungselements und das Werkstück zumindest in Eingriff stehen,
f. die Finger von dem Befestigungselement nach Schritt e. weggedrückt werden,
**dadurch gekennzeichnet,**
**dass** Haltefinger (70, 90, 110) mit einer Länge relativ zu dem Plunger und dem Befestigungselement vorgesehen werden, die einen Zwischenraum zwischen der Fläche der Finger gegenüberliegend dem Werkstück und dem Werkstück selbst nach Installation des Befestigungselementes in der Tafel erzeugen, und
der Plunger zurückgezogen wird, nachdem das Befestigungselement installiert worden ist.

14. Verfahren nach Anspruch 13,
ferner mit dem Schritt, dass der Plunger zurückgezogen wird, nachdem das Befestigungselement installiert worden ist, um die mit den versetzten Bereichen (66) über Nockenwirkung in Verbindung stehenden Fußenden (76) der Finger weiter und weg von dem installierten Befestigungselement zu bewegen, wodurch das Befestigungselement freigegeben wird.

15. Verfahren nach Anspruch 13 oder 14,
wobei die Finger (70) mit dem Befestigungselement (60) in Eingriff stehen, bis das Befestigungselement vollständig installiert ist, und anschließend die Finger das Befestigungselement freigeben.

16. Verfahren nach Anspruch 13,
ferner mit dem Schritt, dass die Finger gegen das Befestigungselement vorgespannt werden, wenn das Befestigungselement installiert wird.

## Revendications

1. Outil d'installation pour installer un élément de fixation (60) sur un panneau (64), ledit élément de fixation incluant une partie de corps, une partie de fixation centrale faisant saillie comportant une extrémité libre, une face latérale et une zone décalée (66) sur les côtés globalement opposés de ladite face latérale, ladite zone décalée (66) étant espacée radialement de ladite face latérale pour accouplement avec des doigts (70) de saisie globalement opposés dudit outil d'installation, ledit outil d'installation comprenant :
un corps principal (4) comportant un passage (36) de piston et un conduit transversal (56) d'alimentation en éléments de fixation recevant des éléments de fixation pour installation sur ledit panneau, lesdits éléments de fixation étant orientés de sorte que ladite partie de fixation fait face audit panneau (64) ;
un piston (20) monté à va-et-vient à l'intérieur dudit passage (36) de piston, comportant une extrémité libre à va-et-vient dans ledit conduit d'alimentation pour fixer un élément de fixation (60) audit panneau (64) ;
au moins deux doigts (70, 90, 110) de maintien supportés de manière fonctionnelle par ledit piston (20) et mobiles avec celui-ci, lesdits doigts comportant chacun une partie d'extrémité libre s'étendant au-delà de ladite extrémité libre de piston pour un maintien positif d'un élément de fixation lors de la réception dudit élément de fixation dans ledit passage de piston à partir dudit conduit d'alimentation ;
ledit piston (20) entraînant ensuite ladite partie de fixation d'élément de fixation dans ledit panneau (64), tandis que ledit élément de fixation est maintenu par lesdits doigts maintenant l'orientation dudit élément de fixation lorsqu'il est entraîné dans ledit panneau ; et
lesdites extrémités libres de doigts basculant vers l'extérieur pour libérer ledit élément de fixation, lesdites zones décalées dudit élément de fixation étant formées de sorte que les doigts sont libérés par le déplacement relatif de l'élément de fixation aux doigts,
**caractérisé en ce que**
les doigts (70) de maintien comportent une partie (70) de jambe et une partie (76) de pied, la partie de pied s'étend vers l'intérieur dans la direction du piston, la partie de pied étant apte à engager la zone décalée (66) de l'élément de fixation, la longueur des doigts (70, 90, 110) de maintien par rapport au piston (20) et à l'élément de fixation (60) est telle que la surface des doigts faisant face audit panneau (64) présente un dégagement par rapport audit panneau après installation dudit élément de fixation dans le panneau, que, lorsque le piston se retire après installation, lesdites extrémités de pieds desdits doigts sont aptes à dévier contre lesdites zones décalées (66) et à s'écarter dudit élément de fixation installé pour libérer ledit élément de fixation installé.

2. Outil d'installation selon la revendication 1, **caractérisé en ce que** l'extrémité libre (76) de la partie de pied de chaque doigt est incurvée pour venir au contact de la zone décalée (66) de l'élément de fixation (60) pour libérer l'élément de fixation après installation de l'élément de fixation.

3. Outil d'installation selon la revendication 1 ou la revendication 2, comprenant en outre un manchon (32) monté à va-et-vient autour du piston (20), ledit manchon comportant une paroi intérieure à contour (86, 87, 88) ; les doigts comportent un bord extérieur à contour (80, 82, 83) adjacent à la paroi intérieure du manchon, le bord extérieur à contour des doigts et le bord intérieur à contour du manchon étant juxtaposés et formés de manière coopérante pour faire pivoter les doigts (70) en et hors d'engagement avec l'élément de fixation (60) lorsque le piston et le manchon bougent l'un par rapport à l'autre.

4. Outil d'installation selon la revendication 1, comprenant en outre un moyen (102) de rappel servant à rappeler les doigts dans la direction du piston pour un engagement positif de l'élément de fixation.

5. Outil d'installation selon l'une quelconque des revendications 1 à 4, dans lequel lesdites zones décalées (66) et lesdites extrémités libres de maintien desdits doigts sont espacées de ladite extrémité libre de partie de fixation d'élément de fixation.

6. Outil d'installation selon la revendication 5, dans lequel ladite zone (66) de décalage desdits éléments de fixation est dentelée par rapport à une surface latérale desdits éléments de fixation, et dans lequel lesdites extrémités libres (76) de maintien desdits doigts font saillie des surfaces latérales adjacentes desdits doigts et sont configurées pour être reçues dans ladite zone de décalage.

7. Outil d'installation selon l'une quelconque des revendications précédentes, dans lequel ledit élément de fixation (60) est un élément de fixation automatique.

8. Elément de fixation pour installation dans une pièce d'oeuvre, l'élément de fixation comportant une ligne centrale s'étendant longitudinalement et étant conçu pour être installée par un outil d'installation, l'outil d'installation comportant un piston (20) destiné à engager l'élément de fixation (60) et à l'entraîner dans une pièce d'oeuvre (64), et des doigts (70) de maintien destinés à maintenir et guider l'élément de fixation lorsque l'élément de fixation est entraîné par le piston au moins jusqu'à ce que l'élément de fixation soit auto-supporté entre le piston et la pièce d'oeuvre, l'élément de fixation comprenant :
une partie (60) de corps, une partie centrale de fixation faisant saillie comportant une extrémité libre (67), une face latérale et une zone décalée (66) réalisée sur lesdites faces latérales des côtés globalement opposés de ladite ligne centrale s'étendant longitudinalement, et espacée de celle-ci, ladite partie centrale de fixation en saillie ayant une configuration faisant que, lorsqu'on la presse dans une pièce d'oeuvre, elle verrouille mutuellement la partie inférieure de l'élément de fixation avec le matériau de pièce d'oeuvre pour fournir une liaison puissante entre l'élément de fixation et la pièce d'oeuvre ; et
lesdites zones décalées (66) étant aptes à recevoir les doigts dans une position d'engagement mutuel positif entre l'élément de fixation et les doigts pour positionner et aligner précisément l'élément de fixation par rapport à la pièce d'oeuvre jusqu'à engagement de la partie inférieure de l'élément de fixation et de la pièce d'oeuvre,
**caractérisé en ce que**
lesdites zones décalées sont espacées de ladite partie centrale de fixation en saillie d'une valeur fournissant un dégagement entre lesdits doigts et ladite pièce d'oeuvre après installation dudit élément de fixation et sont formées avec des surfaces de came qui permettent aux doigts de pivoter par rapport à l'élément de fixation lors du retrait du piston après installation.

9. Elément de fixation selon la revendication 8, dans lequel les zones décalées (66) sont définies par des rainures s'étendant globalement latéralement par rapport à la ligne centrale s'étendant longitudinalement de l'élément de fixation le long d'au moins deux côtés opposés de l'élément de fixation.

10. Elément de fixation selon la revendication 9, dans lequel la rainure a une section transversale globalement semi-circulaire et par laquelle les doigts (70) sont écartés par effet de came de l'élément de fixation (60) après installation de l'élément de fixation dans la pièce d'oeuvre.

11. Elément de fixation selon la revendication 8, dans lequel les zones décalées (66) sont définies par des encoches formées dans au moins des côtés opposés de l'élément de fixation.

12. Elément de fixation selon la revendication 8, dans lequel les zones décalées (66) sont des zones en saillie réalisées sur l'élément de fixation.

13. Procédé pour installer un élément de fixation dans une pièce d'oeuvre, le procédé comprenant les étapes dans lesquelles :
a. on utilise un outil d'installation pour installer un élément de fixation (60), l'outil d'installation comportant un piston (20) destiné à engager un élément de fixation et à entraîner l'élément de fixation dans une pièce d'oeuvre (64), et des doigts (70, 90, 110) de maintien destinés à maintenir et à guider l'élément de fixation lorsque l'élément de fixation est entraîné par le piston au moins jusqu'à ce que l'élément de fixation (60) soit pris au piège entre le piston (20) et la pièce d'oeuvre (64) ;
b. on utilise un élément de fixation (60) pour installation dans une pièce d'oeuvre (64), l'élément de fixation comportant une partie (60) de corps, une partie centrale de fixation en saillie comportant une extrémité libre (67), une face latérale et des zones décalées (66) réalisées sur des côtés globalement opposés de ladite face latérale ;
c. on introduit un élément de fixation (60) dans l'outil d'installation ;
d. on positionne l'élément de fixation (60) entre les doigts (70) au niveau de la zone décalée (66) pour positionner et aligner précisément l'élément de fixation par rapport à la pièce d'oeuvre ;
e. on engage le piston (20) contre l'élément de fixation et on entraîne l'élément de fixation contre la pièce d'oeuvre lorsque les doigts saisissent l'élément de fixation jusqu'à ce que la partie inférieure de l'élément de fixation et la pièce d'oeuvre soient au moins engagées ;
f. on force les doigts à l'écart de l'élément de fixation après l'étape e.,
**caractérisé par**
la disposition de doigts (70, 90, 110) de maintien ayant une longueur relative au piston et à l'élément de fixation qui produit un dégagement entre la surface des doigts faisant face à la pièce d'oeuvre et la pièce d'oeuvre elle-même après installation de l'élément de fixation dans le panneau, et
le retrait du piston après installation de l'élément de fixation.

14. Procédé selon la revendication 13 et comprenant en outre l'étape de retrait du piston après installation de l'élément de fixation pour dévier des extrémités (76) de pieds des doigts contre lesdites zones décalées (66) et à l'écart de l'élément de fixation installé, en libérant ainsi ledit élément de fixation.

15. Procédé selon la revendication 13 ou la revendication 14, dans lequel les doigts (70) engagent l'élément de fixation (60) jusqu'à installation complète de l'élément de fixation, et dans lequel les doigts libèrent ensuite l'élément de fixation.

16. Procédé selon la revendication 13, comprenant en outre l'étape de rappel des doigts contre l'élément de fixation lors de l'installation de l'élément de fixation.
